# EUROPÄISCHE PATENTSCHRIFT

(11) **EP 1 611 713 B1**
(45) Veröffentlichungstag und Bekanntmachung des Hinweises auf die Patenterteilung: **08.01.2014**
(21) Anmeldenummer: 04723191.5
(22) Anmeldetag: 25.03.2004
(51) Int. Cl.: H04L 12/413, H04L 12/40, G05B 19/418

(54) **SCHALTANLAGENSYSTEM UND VERFAHREN ZUR INSTALLATION VON EINSCHUBGERÄTEN IN SCHALTANLAGEN**
SWITCHGEAR SYSTEM AND METHOD FOR THE INSTALLATION OF WITHDRAWABLE UNITS INTO SWITCHGEARS
SYSTEME D'INSTALLATIONS DE DISTRIBUTION ET PROCEDE POUR MONTER DES APPAREILS ENFICHABLES DANS DES INSTALLATIONS DE DISTRIBUTION

(30) Priorität: 04.04.2003 DE 10315730
(43) Veröffentlichungstag der Anmeldung: 04.01.2006
(73) Patentinhaber: ABB AG, 68309 Mannheim (DE)
(72) Erfinder: MERKEL, Hans-Peter, 69198 Schriesheim (DE); ZANK, Gunnar, 06179 Teutschenthal (DE)
(86) Internationale Anmeldenummer: PCT/EP2004/003153
(87) Internationale Veröffentlichungsnummer: WO 2004/088928

(56) Entgegenhaltungen:
- WO-A-02/05107
- DE-A1- 10 154 262
- PROF. DR. FRITHJOF KLASEN: "Feldbus, Ethernet, Internet, TCP/IP - Alles klar?"[Online] 15. November 2000 (2000-11-15), XP002288533 GUMMERSBACHER INDUSTRIEFORUM Gefunden im Internet: URL:http://www.gm.fh-koeln.de/f10/fuk/doku mentation/vortraege/vortrag_klasen.pdf> [gefunden am 2004-07-14]
- HADELLIS L ET AL: "An integrated approach for an interoperable industrial networking architecture consisting of heterogeneous fieldbuses" COMPUTERS IN INDUSTRY, ELSEVIER SCIENCE PUBLISHERS. AMSTERDAM, NL, Bd. 49, Nr. 3, Dezember 2002 (2002-12), Seiten 283-298, XP004393716 ISSN: 0166-3615

## Beschreibung

Die Erfindung betrifft ein Schaltanlagensystem und ein Verfahren zur Installation von Einschubgeräten in Schaltanlagen, insbesondere in Niederspannungsschaltanlagen, sowie ein Einschubgerät.

Schaltanlagensysteme, insbesondere Niederspannungsschaltanlagen, mit Schubeinsatztechnik sind im Prinzip bekannt und werden von einigen Herstellern unter verschiedenen Produktmarkennamen vertrieben, beispielsweise von SIEMENS unter dem Namen SIVACON mit Einschubgerät Simocode DP, oder von ABB unter dem Namen MNS mit Einschubgerät INSUM.

Es werden dabei heute die unterschiedlichsten Niederspannungsschaltgeräte in Einschüben zusammengefasst, eingebaut und miteinander verdrahtet, wodurch modulare Einschubgeräte entstehen, die hier auch als Geräte bezeichnet werden. Einige Geräte kommunizieren über einen Feldbus, im Folgenden auch kurz als Bus bezeichnet. Jedes dieser kommunizierenden Geräte erhält über ein Parametriertool eine eindeutige Adresse, um kommunizieren zu können. Die Adresse ist im Gerät spannungsausfallsicher gespeichert, und zwar nach dem Stand der Technik entweder mittels Dip-Schalter manuell oder in einem nichtflüchtigen elektronischen Speicher eingestellt.

Zusätzlich sind in dem Gerät weitere für den Betrieb erforderliche Basisinformationen, im Folgenden auch Gerätedaten genannt, spannungsausfallsicher gespeichert. Dies können beispielsweise Grenzwerte sein, die zu überwachen oder einzuhalten sind, oder kritische Zeitparameter oder Parameter für das Busprotokoll.

Wird ein neues Gerät an den Bus angeschlossen, muss zuerst die Geräteadresse, die das Gerät in dem Bussystem unverwechselbar und identifizierbar macht, mit einem Parametrier-Tool programmiert werden. Danach erst kann die Busverbindung hergestellt werden und die Gerätedaten können mit einem weiteren Tool in das Gerät geladen werden.

Bei Austausch eines Gerätes müssen zunächst die Gerätedaten mit Hilfe von Tools ausgelesen und außerhalb der Schaltanlage zwischengespeichert werden, bevor das neue Gerät physikalisch installiert, die Adresse vergeben und das neue Gerät wieder wie oben beschrieben mit den Gerätedaten aus dem Zwischenspeicher geladen werden kann.

Dokument DE 101 54 262 offenbart ein Verfahren zur Überwachung von Betriebsparametern von Schaltanlagen. Die Daten der Schaltanlage werden beispielsweise über ein Modem zu einem Zentralrechner übertragen, welcher per Internet erreichbar ist. Die Daten der Schaltanlage können somit vom Zentralrechner per TCP/IP abgefragt werden.

Werden also nach dem Stand der Technik Einschubgeräte in Schaltanlagen installiert, so sind umfangreiche manuelle Eingriffe erforderlich um die nötigen Handlungen auszuführen, und es werden zusätzliche, manuell zu bedienende Geräte und Softwareprogramme benötigt.

Vor dem Hintergrund des oben geschilderten Standes der Technik ist es daher die Aufgabe der vorliegenden Erfindung, ein Schaltanlagensystem und ein Verfahren zu schaffen, durch das die Installation von Einschubgeräten in Schaltanlagen deutlich vereinfacht wird.

Die Aufgabe wird hinsichtlich des Schaltanlagensystems gelöst durch die kennzeichnenden Merkmale des Anspruchs 1, und hinsichtlich des Verfahrens durch die kennzeichnenden Merkmale des Anspruchs 10 und hinsichtlich des Einschubgerätes durch die kennzeichnenden Merkmale des Anspruchs 21.

Erfindungsgemäß also ist die Kommunikation wenigstens eines Einschubgerätes in einer Schaltanlage mit dem Feldbus mittels Ethernet TCP/IP Technologie verwirklicht, und das wenigstens eine Einschubgerät umfasst eine TCP/IP Schnittstelle.

Unter TCP/IP versteht man eine bestimmte Art des Busprotokolls, das aus der Internet-Technik kommt und dort auch verwendet wird. Ethernet bezeichnet eine industriell einsetzbaren Bustyp.

In einer sehr vorteilhaften Ausführungsform eines erfindungsgemäßen Systems ist in jedem Schaltschrank wenigstens ein Ethernet-Switch angebracht, mit dem das wenigstens eine Einschubgerät kommuniziert. Ferner ist in dem Ethernet Netzwerk ein Applikations-Server vorhanden, der wenigstens die TCP/IP Adressvergabe verwaltet, und eine Datenbank; in der wenigstens Gerätedaten des wenigstens einen Einschubgerätes wenigstens gespeichert und/oder verwaltet werden. Die dabei verwendeten Mechanismen der Adressvergabe durch einen Applikations-Server, auch DHCP-Server genannt, sind dabei als solche heute im Stand der Technik bekannt.

Gemäß einer besonders vorteilhaften Ausgestaltung der Erfindung ist jedem Einschubfach - im Folgenden auch als Einbauplatz bezeichnet - ein eindeutiger Port des Ethernet-Switches zugeordnet. Dabei können mehrere Einschubfächer bzw. Einbauplätze in einer Ebene innerhalb des Schaltschrankes-angeordnet sein.

Eine weitere vorteilhafte Ausgestaltungsmöglichkeit der Erfindung sieht vor, dass die Datenbank wenigstens für jedes Einschubgerät wenigstens Informationen zu dessen Einbauort und zu dessen vorgesehener Applikation beinhaltet. Informationen zu dem Einbauort können dabei vorteilhafterweise Angaben zu dem Ethernet-Switch und dem Port des Ethernet-Switches sein, dem das Einschubgerät zugeordnet ist. Applikationsbezogene Informationen umfassen vorteilhafterweise ein eindeutiges Applikationskennzeichen und zugehörige Gerätedaten.

Erfindungsgemäß aufgebaute Systeme zeichnen sich dadurch aus, dass Gerätedaten zwischen der Datenbank und einem Einschubgerät über den Applikations-Server ausgetauscht werden können.

In besonders vorteilhafter Weise enthält der Applikations-Server eine Geräteerkennungssoftware zur Erkennung eines einem Port eines Ethernet-Switches zugeordneten Gerätes. Die Geräteerkennungssoftware kann dabei den Gerätetyp eines an einem Port eines Ethernet-Switches zugeordneten Gerätes erkennen. Die Geräteerkennungssoftware kann vorteilhafterweise auch den Austausch von Gerätedaten zwischen der Datenbank und einem Einschubgerät über den Applikations-Server steuern.

Hinsichtlich des Verfahrens zur Installation von Einschubgeräten in Schaltanlagen besteht die Erfindung darin, dass die Kommunikation über den Feldbus auf Ethernet TCP/IP Technologie basiert, und die Geräteadressen der Einschubgeräte diesen von einem in das Ethernet Netzwerk integrierten Applikations-Server automatisch zugeordnet und verwaltet werden, wobei wenigstens die Basisinformationen für jedes Einschubgerät aus einer Datenbank automatisch in das Einschubgerät heruntergeladen werden.

Dabei ist es von besonderem Vorteil, wenn die Geräteadressen den Einschubgeräten bei oder nach dem Einbau in den Schaltschrank der Schaltanlage automatisch zugeordnet und/oder die Basisinformationen in die Einschubgeräte bei oder nach dem Einbau der Einschubgeräte in den Schaltschrank automatisch heruntergeladen werden. Es sind dann nämlich keine manuellen Tätigkeiten mehr an den Einschubgeräten vor deren Einsetzten in ihren vorgesehenen Einbauplatz nötig, was die Installation erheblich vereinfacht.

Insbesondere vorteilhaft ist es, wenn wenigstens die Basisinformationen für jedes Einschubgerät aus der Datenbank über den Applikations-Server heruntergeladen werden. Vorteilhaft ist es auch, wenn neben den Basisinformationen noch weitere Applikations- und Geräteinformationen für wenigstens ein Einschubgerät aus der Datenbank automatisch in das Einschubgerät heruntergeladen werden.

Sehr vorteilhaft ist auch die Ausgestaltungsform, bei der die Einschubgeräte im Schaltschrank über TCP/IP mit einem dem Schaltschrank zugeordneten Ethernet-Switch kommunizieren. Jeder Schaltschrankebene und/oder dem Einbauort jedes Einschubgerätes wird dann vorteilhafterweise in dem Schaltschrank ein eindeutiger Port des Ethernet-Switches zugeordnet.

Eine vorteilhafte Ausgestaltung des erfindungsgemäßen Verfahrens ist dadurch gekennzeichnet, dass Gerätedaten aller Schaltanlagengeräte in der Datenbank verwaltet werden. Zu jedem Einschubgerät werden dann vorteilhafterweise Informationen über die Verwendung des Einschubgerätes sowie die dazu benötigten Basisinformationen zusammen mit der Information über seinen Einbauort gespeichert.

Eine weitere sehr vorteilhafte Ausgestaltung der Erfindung sieht vor, dass der Gerätetyp eines Einschubgerätes bei dessen Einbau an einem Einbauort im Schaltschrank von dem Applikations-Server automatisch erkannt wird. Die in dem Applikations-Server vorhandene Software enthält dazu entsprechende geeignete Programmteile und/oder Routinen. Die in der Datenbank vorhandenen Gerätedaten werden dabei automatisch auf Kompatibilität zu dem von dem Applikations-Server erkannten Gerätetyp geprüft. Wird keine Übereinstimmung festgestellt, so erfolgt kein automatisches Laden der Gerätedaten; es wird stattdessen eine Meldung ausgegeben, so dass ein guter Schutz vor Vertauschung von Geräten gegeben ist.

Der Vorteil des erfindungsgemäßen Verfahrens insgesamt ergibt sich daraus, dass weder beim Installieren eines neuen Einschubgerätes in einen Schaltschrank, noch beim Austausch eines Einschubgerätes, beispielsweise im Rahmen von Wartungsarbeiten, Geräteadressen und/oder Gerätedaten manuell eingelesen, ausgelesen oder ausgetauscht werden müssen. Das Einschubgerät wird nur noch in seinen vorgesehenen Einbauplatz eingesteckt und somit physikalisch an das Ethernet Feldbussystem angeschlossen. Die weitere logische Installation des Einschubgerätes erfolgt danach ohne manuelles Zutun automatisch.

Eine überaus vorteilhafte Variante der Erfindung sieht allerdings vor, dass jeder Verfahrensschritt bei Bedarf dennoch manuell überwacht und/oder durchgeführt werden kann, wenn es vom Anwender oder Bediener gewünscht wird. Somit ist im Notfall ein Eingreifen eines menschlichen Bedieners als Sicherheitsvorkehrung immer noch möglich.

Ein erfindungsgemäßes Einschubgerät zum Einbau in eine Schaltanlage ist dadurch gekennzeichnet, dass die Feldbus-Kommunikation des Einschubgerätes auf Ethernet TCP/IP Technologie beruht und wenigstens eine Ethernet TCPI/P-Schnittstelle in dem Einschubgerät enthalten ist.

Weitere vorteilhafte Ausgestaltungen und Verbesserungen der Erfindung und weitere Vorteile sind den Unteransprüchen zu entnehmen.

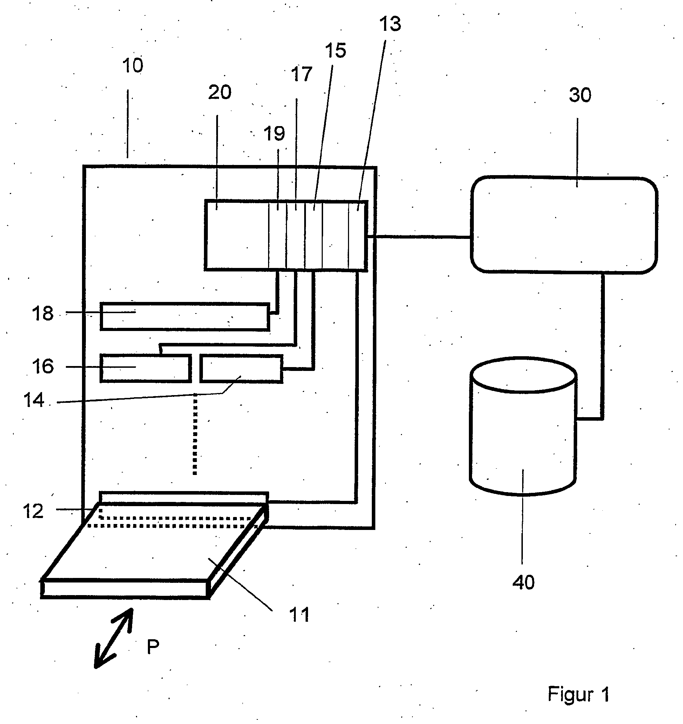

Anhand der einzigen Figur, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

In der Figur ist ein Schaltschrank 10 dargestellt, der zu einer, hier nicht dargestellten, Schaltanlage gehört. In dem Schaltschrank 10 befinden sich vier Einbauplätze 12, 14, 16, 18 für Einschubgeräte, von denen hier ein Einschubgerät 11 stellvertretend dargestellt ist. Die Einbauplätze 14 und 16 sind dabei in einer Ebene innerhalb des Schaltschrankes 10 angeordnet. In dem Schaltschrank 10 befindet sich weiterhin ein Ethernet-Switch 20, der so viele Ports 13, 15, 17, 19 aufweist wie Einbauplätze 12, 14, 16, 18 in dem Schaltschrank vorhanden sind. Jeder der Ports 13, 15, 17, 19 ist eindeutig mit einem der Einbauplätze 12, 14, 16, 18 verbunden. Die Einbauplätze 12, 14, 16, 18, der Ethernet-Switch 20 mit den Ports 13, 15, 17, 19 und die Verbindungsleitungen zwischen den Ports 13, 15, 17, 19 und den Einbauplätzen 12, 14, 16, 18 sind Teil eines Ethernet TCP/IP basierenden Feldbussystems.

Das Einschubgerät 11 ist beispielsweise eine Motorschutzschaltung. Es wird zur Installation in Richtung des Pfeils P in den Einbauplatz 12 eingeschoben. Beim Einschieben erfolgt über Steckkontakte an der dem Einbauplatz 12 zugewandten Schmalseite des Einschubgerätes 11 die elektrische Verbindung mit dem Ethernet TCP/IP basierenden Bussystem.

Weiterhin sind ein Applikations-Server 30 und eine Datenbank 40 Teile des Ethernet TCP/IP basierten Feldbussystems. Der Applikations-Server 30 ist mit dem Ethernet-Switch 20 in dem Schaltschrank 10 verbunden. Die Datenbank 40 ist mit dem Applikations-Server 30 verbunden, und über diesen indirekt mit dem Ethernet-Switch 20 in dem Schaltschrank 10.

Andere Teile bzw. Teilsysteme eines Feldbussystems, wie beispielsweise ein Feldbuscontroller oder andere Busteilnehmer, sind hier mit Rücksicht auf die Klarheit der Darstellung nicht eingezeichnet.

Die Kommunikation aller beteiligten Geräte über den Feldbus basiert auf Ethernet TCP/IP Technologie. Die verwendeten Mechanismen der Adressvergabe durch einen DHCP-Server sind Stand der Technik. Der in das Ethernet Netzwerk integrierte Applikations-Server 30 arbeitet als DHCP-Server und verwaltet die TCP/IP Adressvergabe.

Zusätzlich werden Gerätedaten wenigstens der Einschubgeräte in der Datenbank 40 gespeichert und verwaltet. Die Datenbank 40 beinhaltet dabei wenigstens folgende gerätebezogene Information: Ein eindeutiges Applikationskennzeichen des Gerätes, beispielsweise das Kennzeichen aus dem Kraftwerks-Kennzeichnungs-System (KKS), wenn die Schaltanlage in einem Kraftwerk eingesetzt wird, weitere Gerätedaten und Informationen zum Einbauort, beispielsweise in welchem Schaltschrank (Ethernet-Switch) und an welchem Einbauplatz (Port des Ethernet-Switches) das Gerät eingebaut ist. Im Falle der Motorschutzschaltung 11 sind solche weiteren Gerätedaten beispielsweise Strom- oder Temperaturgrenzwerte oder nicht zu überschreitende Abschalt- oder Auslösezeiten.

Die Einschubgeräte 11 in ihren Einbauplätzen 12, 14, 16, 18 im Schaltschrank 10 kommunizieren über Ethernet TCP/IP zunächst mit dem dem Schaltschrank 10 zugeordneten Ethernet-Switch 20. Dieser Ethernet-Switch 20 und die übergeordnete Ethernet Netzwerk Topologie können redundant ausgeführt sein.

Jedem Einbauplatz 12, 14, 16, 18 im Schaltschrank 10 ist ein eindeutiger Port des Ethernet-Switches 20 zugeordnet, hier dem Einbauplatz 12 der Port 13, dem Einbauplatz 14 der Port 15, dem Einbauplatz 16 der Port 17 und dem Einbauplatz 18 der Port 19.

Wenn eine neues Gerät, beispielsweise die Motorschutzschaltung 11, in einen Einbauplatz, hier den Einbauplatz 12, der Schaltanlage 10 eingesteckt wird, wird in dem Applikations-Server 30 erkannt, dass ein Gerät in einen Einbauplatz gesteckt wurde und welcher Einbauplatz belegt wurde. Der Applikations-Server 30 ordnet dem Gerät daraufhin eine TCP/IP Adresse automatisch zu.

Ein Softwareprogramm im Applikations-Server 30 erkennt das neue Gerät und lädt die dem Einbauort zugeordnete Applikation und die benötigten Gerätedaten aus der Datenbank 40 über den Applikations-Server 30 in das Gerät. Es ist von dem Feldbus-System dabei sichergestellt, dass in der Datenbank 40 immer die aktuellen Gerätedaten verfügbar sind.

Zusätzlich kann die Software erkennen, welcher Gerätetyp eingesteckt wurde (z.B. ein Motorschutzschalter, ein Motorstarter oder eine Sicherungsleiste). Daraufhin wird geprüft, ob die Applikation und/oder die Gerätedaten, die in der Datenbank zu diesem gerät gespeichert sind, auch zu diesem Gerätetyp passen. Wenn keine Übereinstimmung festgestellt werden kann, wird die Applikation nicht automatisch geladen und eine Meldung ausgegeben. Dadurch kann ein wirksamer Schutz vor Vertauschung von Einschubgeräten sichergestellt werden.

Wenn nun ein Gerät, beispielsweise die Motorschutzschaltung 11, aus der Schaltanlage 10 entfernt wird, speichert der Applikations-Server 30 die Information, dass und welches Gerät entfernt wurde, auf der Datenbank 40 ab. Ein manuelles Zurücklesen der Gerätedaten ist nicht erforderlich.

Wird ein Gerät wieder eingesteckt, so wird nach Wiederherstellung der TCP/IP Kommunikation geprüft, ob es das von diesem Einbauplatz vorher entfernte Gerät ist, und ob somit dessen Einbauplatz-abhängige Applikation noch vorhanden ist. In diesem Fall wird der Applikations-Server keine neuen Gerätedaten von der Datenbank 40 herunterladen. Ergibt die Prüfung jedoch, dass es sich bei dem eingesteckten Gerät um ein neues Gerät handelt, so werden dessen Gerätedaten von der Datenbank 40 über den Applikations-Server 30 in das Gerät geladen.

Manuelle Eingriffe, um die oben beschriebenen Vorgänge der Adresszuteilung, Adressverwaltung und der Übertragung von Gerätedaten in das Gerät einzuleiten oder durchzuführen, sind nicht erforderlich. Das Einschubgerät wird nur noch in seinen vorgesehenen Einbauplatz eingesteckt und somit physikalisch an das Ethernet Feldbussystem angeschlossen. Die weitere logische Installation des Einschubgerätes erfolgt danach ohne manuelles Zutun automatisch. Bei Bedarf kann aber jeder Verfahrensschritt dennoch manuell überwacht und/oder durchgeführt werden, wenn es vom Anwender oder Bediener gewünscht wird. Somit ist im Notfall ein Eingreifen eines menschlichen Bedieners als Sicherheitsvorkehrung immer noch möglich.

## Patentansprüche

1. Schaltanlagensystem mit einer Schaltanlage in Einschubtechnik, wobei die Einschubgeräte in Schaltschränken und dort in Einschubfächern installiert sind, über einen Feldbus kommunizieren, über eine Geräteadresse eindeutig identifiziert sind und in einem Speicher im Einschubgerät für den Gerätebetrieb erforderliche Basisinformationen enthalten sind, **dadurch gekennzeichnet, dass** die Kommunikation wenigstens eines Einschubgerätes (11) mit dem. Feldbus mittels Ethernet TCP/IP Technologie verwirklicht ist und das wenigstens ein Einschubgerät (11) eine TCP/IP Schnittstelle umfasst.

2. Schaltanlagensystem nach Anspruch 1, **dadurch gekennzeichnet, dass** in jedem Schaltschrank (10) wenigstens ein Ethernet-Switch (20) zur Kommunikation mit dem wenigstens einen Einschubgerät (11), sowie außerhalb des Schaltschrankes ein Applikations-Server (30), der wenigstens die TCP/IP Adressvergabe verwaltet, und eine Datenbank (40), in der wenigstens Gerätedaten des wenigstens einen Einschubgerätes (11) wenigstens gespeichert und/oder verwaltet werden, vorhanden sind.

3. Schaltanlagensystem nach Anspruch 2, **dadurch gekennzeichnet, dass** jedem Einschubfach (12, 14, 16, 18) ein eindeutiger Port (13, 15, 17, 19) des Ethernet-Switches (20) zugeordnet ist.

4. Schaltanlagensystem nach einem der vorigen Ansprüche, **dadurch gekennzeichnet, dass** die Datenbank (40) wenigstens für jedes Einschubgerät (11) wenigstens Informationen zu dessen Einbauort und zu dessen vorgesehener Applikation beinhaltet.

5. Schaltanlagensystem nach einem der vorigen Ansprüche, **dadurch gekennzeichnet, dass** die Datenbank (40) wenigstens für jedes Einschubgerät (11) Informationen zu dem Ethernet-Switch (20) und dem Port (13, 15, 17, 19) des Ethernet-Switches (20) dem das Einschubgerät (12, 14, 16, 18) zugeordnet ist, beinhaltet.

6. Schaltanlagensystem nach einem der vorherigen Ansprüche, **dadurch gekennzeichnet, dass** Gerätedaten zwischen der Datenbank (40) und einem Einschubgerät (11) über den Applikations-Server (30) ausgetauscht werden können.

7. Schaltanlagensystem nach einem der vorhergehenden Ansprüche, **dadurch gekennzeichnet, dass** der Applikations-Server (30) eine Geräteerkennungssoftware zur Erkennung eines an einem Port (13, 15, 17, 19) eines Ethernet-Switches (20) zugeordneten Gerätes (11) enthält.

8. Schaltanlagensystem nach Anspruch 7, **dadurch gekennzeichnet, dass** die Geräteerkennungssoftware den Gerätetyp eines an einem Port (13, 15, 17, 19) eines Ethernet-Switches (20) zugeordneten Gerätes (11) erkennen kann.

9. Schaltanlagensystem nach Anspruch 8, **dadurch gekennzeichnet, dass** die Geräteerkennungssoftware den Austausch von Gerätedaten zwischen der Datenbank (40) und einem Einschubgerät (11) über den Applikations-Server (30) steuert.

10. Verfahren zur Installation von Einschubgeräten (11) in Schaltanlagen, wobei die Einschubgeräte (11) in einem Schaltschrank (10) in Einschubfächern (12, 14, 16, 18) installiert werden und über wenigstens eine TCP/IP-Schnittstelle verfügen, über einen Feldbus kommunizieren, über eine Geräteadresse eindeutig identifiziert werden können und in einem Speicher für den Gerätebetrieb erforderliche Basisinformationen enthalten, **dadurch gekennzeichnet, dass**
- die Kommunikation über den Feldbus auf Ethernet TCP/IP Technologie basiert,
- die Geräteadressen der Einschubgeräte (11) diesen von einem in das Ethernet Netzwerk integrierten Applikations-Server (30) automatisch zugeordnet und verwaltet werden, und
- wenigstens die Basisinformationen für jedes Einschubgerät (11) aus einer Datenbank (40) automatisch in das Einschubgerät (11) heruntergeladen werden.

11. Verfahren nach Anspruch 10, **dadurch gekennzeichnet, dass** die Geräteadressen den Einschubgeräten (11) bei oder nach dem Einbau in den Schaltschrank (10) der Schaltanlage automatisch zugeordnet und/oder die Basisinformationen in die Einschubgeräte (11) bei oder nach dem Einbau der Einschubgeräte (11) in den Schaltschrank (10) automatisch heruntergeladen werden.

12. Verfahren nach Anspruch 10 oder 11, **dadurch gekennzeichnet, dass** wenigstens die Basisinformationen für jedes Einschubgerät (11) aus der Datenbank (40) über den Applikations-Server (30) heruntergeladen werden.

13. Verfahren nach einem der Ansprüche 10 bis 12, **dadurch gekennzeichnet, dass** wenigstens die Basisinformationen und weitere Applikations- und Geräteinformationen für wenigstens ein Einschubgerät (11) aus der Datenbank (40) automatisch in das Einschubgerät (11) heruntergeladen werden.

14. Verfahren nach einem der Ansprüche 10 bis 13, **dadurch gekennzeichnet, dass** die Einschubgeräte (11) in dem Schaltschrank (10) über TCP/IP mit einem dem Schaltschrank (10) zugeordneten Ethernet-Switch (20) kommunizieren.

15. Verfahren nach einem der Ansprüche 10 bis 14, **dadurch gekennzeichnet, dass** jedem Einschubfach (12, 14, 16, 18) und/oder dem Einbauort jedes Einschubgerätes in dem Schaltschrank ein eindeutiger Port (13, 15, 17, 19) des Ethernet-Switches (20) zugeordnet wird.

16. Verfahren nach einem der Ansprüche 10 bis 15, **dadurch gekennzeichnet, dass** Gerätedaten aller Schaltanlagengeräte (11) in der Datenbank (40) verwaltet werden.

17. Verfahren nach einem der Ansprüche 10 bis 16, **dadurch gekennzeichnet, dass** in der Datenbank (40) zu jedem Einschubgerät (11) Informationen über die Verwendung des Einschubgerätes (11) sowie die dazu benötigten Basisinformationen zusammen mit der Information über seinen Einbauort gespeichert werden.

18. Verfahren nach einem der Ansprüche 10 bis 17, **dadurch gekennzeichnet, dass** der Gerätetyp eines Einschubgerätes (11) bei dessen Einbau an einem Einbauort im Schaltschrank (10) von dem Applikations-Server (30) automatisch erkannt wird.

19. Verfahren nach einem der Ansprüche 10 bis 18, **dadurch gekennzeichnet, dass** die in der Datenbank (40) vorhandenen Gerätedaten automatisch auf Kompatibilität zu dem von dem Applikations-Server (30) erkannten Gerätetyp geprüft werden.

20. Verfahren nach einem der Ansprüche 10 bis 19, **dadurch gekennzeichnet, dass** jeder Verfahrensschritt bei Bedarf auch manuell überwacht und/oder durchgeführt werden kann.

21. Einschubgerät (11) zum Einbau in eine Schaltanlage, **dadurch gekennzeichnet, dass** die Feldbus-Kommunikation des Einschubgerätes (11) auf Ethernet TCP/IP Technologie beruht und wenigstens eine Ethernet TCP/IP-Schnittstelle in dem Einschubgerät (11) enthalten ist.

## Claims

1. Switchgear assembly system having a switchgear assembly using withdrawable unit technology with the withdrawable units being installed in switchgear cabinets, and in insert compartments there, communicating via a field bus, being uniquely identified by an appliance address, and basic information which is required for appliance operation being contained in a memory in the withdrawable unit, **characterized in that** the communication between at least one withdrawable unit (11) and the field bus is implemented using Ethernet TCP/IP technology, and the at least one withdrawable unit (11) is a TCP/IP interface.

2. Switchgear assembly system according to Claim 1, **characterized in that** at least one Ethernet switch (20) is provided in each switchgear cabinet (10) for communication with the at least one withdrawable unit (11), and an application server (30) which manages at least the TCP/IP address allocation and a database (40) in which at least appliance data for the at least one withdrawable unit (11) is at least stored and/or managed are provided outside the switchgear cabinet.

3. Switchgear assembly system according to Claim 2, **characterized in that** each insert compartment (12, 14, 16, 18) is allocated a unique port (13, 15, 17, 19) of the Ethernet switch (20).

4. Switchgear assembly system according to one of the preceding claims, **characterized in that** the database (40) contains, at least for each withdrawable unit (11) at least information relating to its installation location and to its intended application.

5. Switchgear assembly system according to one of the preceding claims, **characterized in that** the database (40) contains, at least for each withdrawable unit (11), information relating to the Ethernet switch (20) and to the port (13, 15, 17, 19) of the Ethernet switch (20) to which the withdrawable unit (12, 14, 16, 18) is allocated.

6. Switchgear assembly system according to one of the preceding claims, **characterized in that** the appliance data can be interchanged between the database (40) and a withdrawable unit (11) via the application server (30).

7. Switchgear assembly system according to one of the preceding claims, **characterized in that** the application server (30) contains appliance identification software for identification of an appliance (11) which is allocated to one port (13, 15, 17, 19) of an Ethernet switch (20).

8. Switchgear assembly according to Claim 7, **characterized in that** the appliance identification software can identify the appliance type of an appliance (11) which is allocated to one port (13, 15, 17, 19) of an Ethernet switch (20).

9. Switchgear assembly system according to Claim 8, **characterized in that** the appliance identification software controls the interchange of appliance data between the database (40) and a withdrawable unit (11) via the application server (30).

10. Method of installation of withdrawable units (11) in switchgear assemblies, in which case the withdrawable units (11) are installed in insert compartments (12, 14, 16, 18) in a switchgear cabinet (10) and have at least one TCP/IP interface, communicate via a field bus, can be identified uniquely by an appliance address and contain basic information which is required for appliance operation in a memory, **characterized in that**
- the communication via the field bus is based on Ethernet TCP/IP technology,
- the appliance addresses of the withdrawable units (11) are automatically allocated to them and managed by an application server (30) which is integrated in the Ethernet network, and
- at least the basic information for each withdrawable unit (11) is downloaded automatically to the withdrawable unit (11) from a database (40).

11. Method according to Claim 10, **characterized in that** the appliance addresses are automatically allocated to the withdrawable units (11) during or after installation in the switchgear cabinet (10) in the switchgear assembly, and/or the basic information is automatically downloaded in the withdrawable units (11) during or after the installation of the withdrawable units (11) in the switchgear cabinet (10).

12. Method according to Claim 10 or 11, **characterized in that** at least the basic information for each withdrawable unit (11) is downloaded from the database (40) via the application server (30).

13. Method according to one of Claims 10 to 12, **characterized in that** at least the basic information and further application and appliance information for at least one withdrawable unit (11) are downloaded automatically from the database (40) to the withdrawable unit (11).

14. Method according to one of Claims 10 to 13, **characterized in that** the withdrawable units (11) in the switchgear cabinet (10) communicate via TCP/IP with an Ethernet switch (20) which is allocated to that switchgear cabinet (10).

15. Method according to one of Claims 10 to 14, **characterized in that** each insert compartment (12, 14, 16, 18) and/or the installation location of each withdrawable unit in the switchgear cabinet is allocated a unique port (13, 15, 17, 19) of the Ethernet switch (20).

16. Method according to one of Claims 10 to 15, **characterized in that** appliance data for all the switchgear assembly appliances (11) is managed in the database (40).

17. Method according to one of Claims 10 to 16, **characterized in that** information about the use of the withdrawable unit (11) and the basic information associated with it are stored together with the information about its installation location in the database (40) for each withdrawable unit (11).

18. Method according to one of Claims 10 to 17, **characterized in that** the appliance type of a withdrawable unit (11) is automatically identified by the application server (30) during its installation at an installation location in the switchgear cabinet (10).

19. Method according to one of Claims 10 to 18, **characterized in that** the appliance data in the database (40) is automatically checked for compatibility with the appliance type identified by the application server (30).

20. Method according to one of Claims 10 to 19, **characterized in that** each method step can also be monitored and/or carried out manually if required.

21. Withdrawable unit (11) for installation in a switchgear assembly, **characterized in that** the field bus communication of the withdrawable unit (11) is based on Ethernet TCP/IP technology, and at least one Ethernet TCP/IP interface is contained in the withdrawable unit (11).

## Revendications

1. Système pour installations de commutation présentant une installation de commutation réalisée dans la technique des tiroirs enfichables,
les appareils à enficher étant installés dans des compartiments d'enfichage d'armoires de commutation, communiquant par un bus de terrain, étant identifiés de manière univoque par une adresse d'appareil,
les informations de base nécessaires pour le fonctionnement des appareils étant reprises dans une mémoire prévue dans l'appareil enfichable,
**caractérisé en ce que**
la communication d'au moins un appareil enfichable (11) avec le bus de terrain est réalisée par la technologie Ethernet TCP/IP, et
**en ce qu'**au moins un appareil d'insertion (11) comporte une interface TCP/IP.

2. Système pour installations de commutation selon la revendication 1, **caractérisé en ce qu'**au moins un commutateur Ethernet (20) assurant la communication avec au moins un appareil enfichable (11) est prévu dans chaque armoire de commutation (10), un serveur d'applications (30) qui gère au moins les données d'adresse TCP/IP et une base de données (40) dans laquelle au moins les données d'au moins un appareil enfichable (11) sont au moins conservées en mémoire et/ou gérées étant prévu à l'extérieur de l'armoire de commutation.

3. Système pour installations de commutation selon la revendication 2, **caractérisé en ce qu'**un port univoque (13, 15, 17, 19) du commutateur Ethernet (20) est associé à chaque étagère d'insertion (12, 14, 16, 18).

4. Système pour installations de commutation selon l'une des revendications précédentes, **caractérisé en ce que** la base de données (40) contient pour chaque appareil enfichable (11) au moins des informations concernant son emplacement de montage et l'application prévue pour lui.

5. Système pour installations de commutation selon l'une des revendications précédentes, **caractérisé en ce que** la base de données (40) contient pour chaque appareil enfichable (11) des informations concernant le commutateur Ethernet (20) et le port (13, 15, 17, 19) du commutateur Ethernet (20) associé à l'appareil enfichable (12, 14, 16, 18).

6. Système pour installations de commutation selon l'une des revendications précédentes, **caractérisé en ce que** les données d'appareil peuvent être échangées entre la base données (40) et un appareil enfichable (11) par l'intermédiaire du serveur d'applications (30).

7. Système pour installations de commutation selon l'une des revendications précédentes, **caractérisé en ce que** le serveur d'applications (30) contient un logiciel de reconnaissance d'appareil qui permet de reconnaître un appareil (11) associé à un port (13, 15, 17, 19) d'un commutateur Ethernet (20).

8. Système pour installations de commutation selon la revendication 7, **caractérisé en ce que** le logiciel de reconnaissance d'appareil peut reconnaître le type d'un appareil (11) associé à un port (13, 15, 17, 19) d'un commutateur Ethernet (20).

9. Système pour installations de commutation selon la revendication 8, **caractérisé en ce que** le logiciel de reconnaissance d'appareil commande l'échange de données d'appareil entre la base de données (40) et un appareil enfichable (11) par l'intermédiaire du serveur d'applications (30).

10. Procédé d'installation d'appareils enfichables (11) dans des installations de commutation,
les appareils enfichables (11) étant installés dans des compartiments d'enfichage (12, 14, 16, 18) d'une armoire de commutation (10) et disposant d'au moins une interface TCP/IP, communiquant par l'intermédiaire d'un bus de terrain, pouvant être identifiés de manière univoque par une adresse d'appareil,
les informations de base nécessaires pour le fonctionnement de l'appareil étant reprises dans une mémoire,
**caractérisé en ce que**
la communication par l'intermédiaire du bus de terrain est basée sur la technologie Ethernet TCP/IP,
les adresses des appareils enfichables (11) sont associées automatiquement à ces appareils et sont gérées par un serveur d'applications (30) intégré dans le réseau Ethernet, et
**en ce qu'**au moins les informations de base concernant chaque appareil enfichable (11) sont téléchargées automatiquement dans l'appareil enfichable (11) depuis une base de données (40).

11. Procédé selon la revendication 10, **caractérisé en ce que** les adresses sont associées automatiquement aux appareils enfichables (11) lors du montage dans l'armoire de commutation (10) de l'installation de commutation ou après ce montage et/ou les informations de base sont téléchargées automatiquement dans les appareils enfichables (11) lors du montage des appareils enfichables (11) dans l'armoire de commutation (10) ou après ce montage.

12. Procédé selon les revendications 10 ou 11, **caractérisé en ce qu'**au moins les informations de base de chaque appareil enfichable (11) sont téléchargées depuis la base de données (40) par l'intermédiaire du serveur d'applications (30).

13. Procédé selon l'une des revendications 10 à 12, **caractérisé en ce qu'**au moins les informations de base et d'autres informations concernant l'application et l'appareil pour au moins un appareil enfichable (11) sont téléchargées automatiquement dans l'appareil enfichable (11) depuis la base de données (40).

14. Procédé selon l'une des revendications 10 à 13, **caractérisé en ce que** les appareils enfichables (11) communiquent dans l'armoire de commutation (10) par TCP/IP avec un commutateur Ethernet (20) associé à l'armoire de commutation (10).

15. Procédé selon l'une des revendications 10 à 14, **caractérisé en ce qu'**un port unique (13, 15, 17, 19) du commutateur Ethernet (20) est associé à chaque compartiment d'enfichage (12, 14, 16, 18) et/ou à l'emplacement de montage de chaque appareil enfichable dans l'armoire de montage.

16. Procédé selon l'une des revendications 10 à 15, **caractérisé en ce que** les données de tous les appareils (11) de l'installation de commutation sont gérées dans la base de données (40).

17. Procédé selon l'une des revendications 10 à 16, **caractérisé en ce que** des informations concernant l'utilisation de l'appareil enfichable (11) ainsi que les informations de base nécessaires dans ce but sont conservées en mémoire en même temps que les informations concernant son emplacement de montage sont conservées en mémoire pour chaque appareil enfichable (11) dans la base de données (40).

18. Procédé selon l'une des revendications 10 à 17, **caractérisé en ce que** le type d'un appareil enfichable (11) est reconnu automatiquement par le serveur d'applications (30) lors de son montage en un emplacement de montage de l'armoire de commutation (10).

19. Procédé selon l'une des revendications 10 à 18, **caractérisé en ce que** la compatibilité des données d'appareil présentes dans la base de données (40) avec le type d'appareil reconnu par le serveur d'applications (30) est vérifiée automatiquement.

20. Procédé selon l'une des revendications 10 à 19, **caractérisé en ce que** si nécessaire, chaque étape du procédé peut également être surveillée et/ou exécutée manuellement.

21. Appareil enfichable (11) destiné à être incorporé dans une installation de commutation, **caractérisé en ce que** la communication par bus de terrain de l'appareil enfichable (11) repose sur la technologie Ethernet TCP/IP et **en ce qu'**au moins une interface Ethernet TCP/IP est prévue dans l'appareil enfichable (11).
